# EUROPÄISCHE PATENTSCHRIFT

(11) **EP 0 958 733 B1**
(45) Veröffentlichungstag und Bekanntmachung des Hinweises auf die Patenterteilung: **06.08.2003**
(21) Anmeldenummer: 99109412.9
(22) Anmeldetag: 11.05.1999
(51) Int. Cl.: A01F 7/06

(54) **Rotor einer Axialtrennvorrichtung**
Rotor for axial flow thresher-separator device
Rotor pour dispositif batteur-séparateur à écoulement axial

(30) Priorität: 21.05.1998 US 82770
(43) Veröffentlichungstag der Anmeldung: 24.11.1999
(73) Patentinhaber: DEERE & COMPANY, Moline, Illinois 61265-8098 (US)
(72) Erfinder: Harden,Philip Alan, Colona, IL 61241 (US); Pfeiffer, Dohn William, Moline, IL 61265 (US); Braunhardt, Klaus Adam, 66482 Zweibrücken (DE)
(74) Vertreter: Magin, Ludwig Bernhard

(56) Entgegenhaltungen:
- EP-A- 0 340 876
- EP-A- 0 622 014
- US-A- 5 688 170

## Beschreibung

Die Erfindung betrifft einen Rotor einer Axialtrennvorrichtung für einen Mähdrescher, mit einer zylindrischen Trommel und an der Trommel befestigten Gutmitnehmerelementen.

Landwirtschaftliche Mähdrescher sind große Maschinen, die landwirtschaftliches Gut ernten, dreschen, trennen und reinigen. Das dabei gewonnene saubere Getreide wird in einem am Mähdrescher befindlichen Korntank für sauberes Getreide gespeichert. Das saubere Korn kann dann vom Korntank durch einen Entladeförderer in einen Lastwagen, Anhänger oder ein anderes Aufnahmebehältnis verbracht werden.

Axialmähdrescher haben ein oder zwei große Rotore, die entlang der Längsachse der Maschine angeordnet sind, um das geerntete Gut zu dreschen und zu trennen. Traditionell haben unterschiedliche Abschnitte des Rotors unterschiedliche Gutmitnehmereinrichtungen. Beispielsweise hat ein aus der US 4 964 838 bekannter Rotor Reibleisten und Vereinzelungsleisten im Separationsabschnitt. Bei einem anderen Separationsrotor. (s. US 4 348 855) wird vorgeschlagen, den Dreschabschnitt mit Reibleisten zu versehen und den Separationsabschnitt mit Transportleisten auszustatten.

Es wurde auch vorgeschlagen, eine Anzahl identischer Kufen sowohl im Dreschabschnitt als auch im Separationsabschnitt zu verwenden (US 4 362 168). Zusätzlich können die Kufen relativ zur Längsachse des Rotors abgewinkelt und mit einer abgeschrägten vorderen Kante versehen sein. Ein anderes Beispiel mit identischen Kufen ist in der US 5 376 047 offenbart, wobei die Kufen mit einer nach oben gedrehten, sich radial erstreckenden Lippe versehen sind.

Die US 5 688 170 zeigt einen Rotor einer Axialtrennvorrichtung eines Mähdreschers, dessen Dreschabschnitt mit Gutmitnehmerelementen ausgestattet ist, deren äußere Oberfläche einen nach außen gekrümmten Abschnitt aufweist, der in der Drehrichtung des Rotors in konkaven Trog übergeht, welcher mit einer sich radial erstreckenden Lippe endet. Die Art der Oberfläche des konvex gekrümmten Abschnitts ist nicht näher offenbart.

Die der Erfindung zugrunde liegende Aufgabe wird darin gesehen, ein verbessertes Gutmitnehmerelement bereitzustellen, das im Dreschabschnitt eines Rotors eines Axialmähdreschers verwendet wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Gutmitnehmerelement gemäß der vorliegenden Erfindung ist eine vorzugsweise hohle Struktur, die einen glatten, konvex gekrümmten oberen Abschnitt aufweist, der in einem konkaven Trog endet, der wiederum in eine radial verlaufende Lippe übergeht. Durch diese Form wird das Erntegut während des Dreschens durch den konvexen Abschnitt mitgenommen und gegen die innere Oberfläche des zylindrischen Rotorgehäuses gedrückt; dabei findet ein Dresch- und/oder Trennvorgang statt. Das Zusammendrücken wird durch den konkaven Trog wiederum vermindert, und schließlich wird das Erntegut durch die sich radial erstreckende Lippe radial nach außen gestoßen. Durch die glatte Oberfläche des konvex gekrümmten Abschnittes ist vermieden, daß sich Erntegut an irgendwelchen Vorsprüngen oder dergleichen festsetzt und die Funktion des Gutmitnehmerelements nachteilig beeinflußt. Es können aber auch Reibleisten an der Oberfläche vorgesehen sein.

Das Gutmitnehmerelement ist mit führenden und nachlaufenden Befestigungsflanschen ausgestattet, um das Gutmitnehmerelement an der äußeren Oberfläche eines Rotors eines Mähdreschers zu befestigen. Dabei ist ein Befestigungsflansch, vorzugsweise der führende Befestigungsflansch, mit einer schlitzförmigen Befestigungsöffnung versehen. Der andere Flansch, also insbesondere der nachlaufende Befestigungsflansch, ist mit einer kreisförmigen Befestigungsöffnung ausgestattet. Durch beide Öffnungen verlaufen Befestigungsbolzen, beispielsweise Schrauben oder Nieten, mit denen das Gutmitnehmerelement am Rotor befestigt ist. Der Vorteil einer schlitzförmigen Befestigungsöffnung, also einem Langloch, besteht in der Anpassungsfähigkeit an eventuell vorhandene Toleranzen oder thermische Ausdehnungskoeffizienten.

In seitlicher Richtung, d. h. in axialer Richtung des Rotors, kann das Gutmitnehmerelement mit Seitenwänden ausgestattet sein, die sich über den Trog hinaus erstrecken und ihn einschließen.

Zur Erhöhung der Festigkeit des Gutmitnehmerelements ist weiterhin vorgeschlagen, es mit einer Rückwand zu versehen, und den nachlaufenden Befestigungsflansch mit einem Verstärkungseckblech zu verbinden, das sich zwischen Rückwand und dem nachlaufenden Befestigungsflansch erstreckt. Diese Rückwand kann aus Gründen der Reduzierung der in Rotation zu versetzenden Masse einen offenen, insbesondere rechteckigen Rahmen bilden. Aus den gleichen Gründen kann das Gutmitnehmerelement eine hohle Struktur aufweisen, also ein Hohlelement sein.

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Axialmähdreschers,
- Fig. 2: eine perspektivische Ansicht des Beschickungs- und Dreschabschnitts des Rotors,

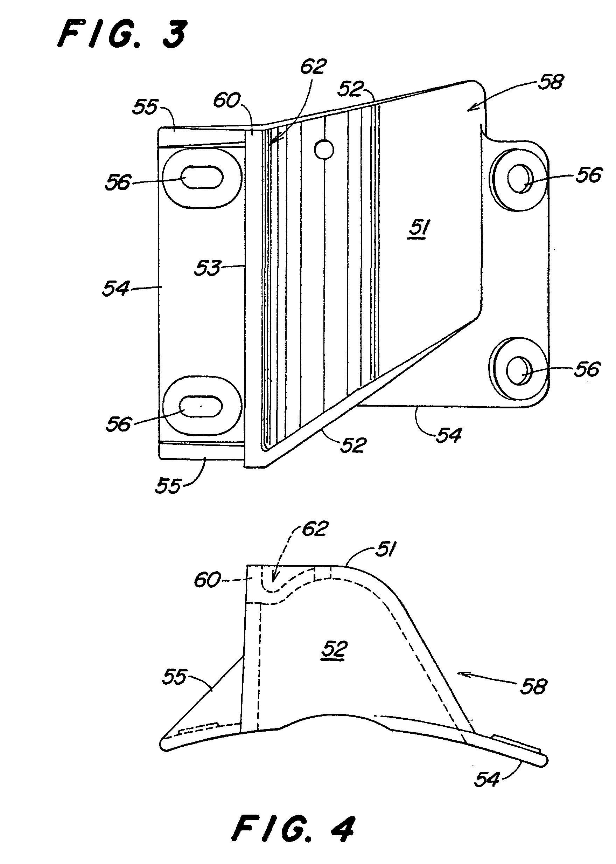

- Fig. 3: eine Draufsicht auf ein Gutmitnehmerelement, und
- Fig. 4: eine Seitenansicht eines Gutmitnehmerelements.

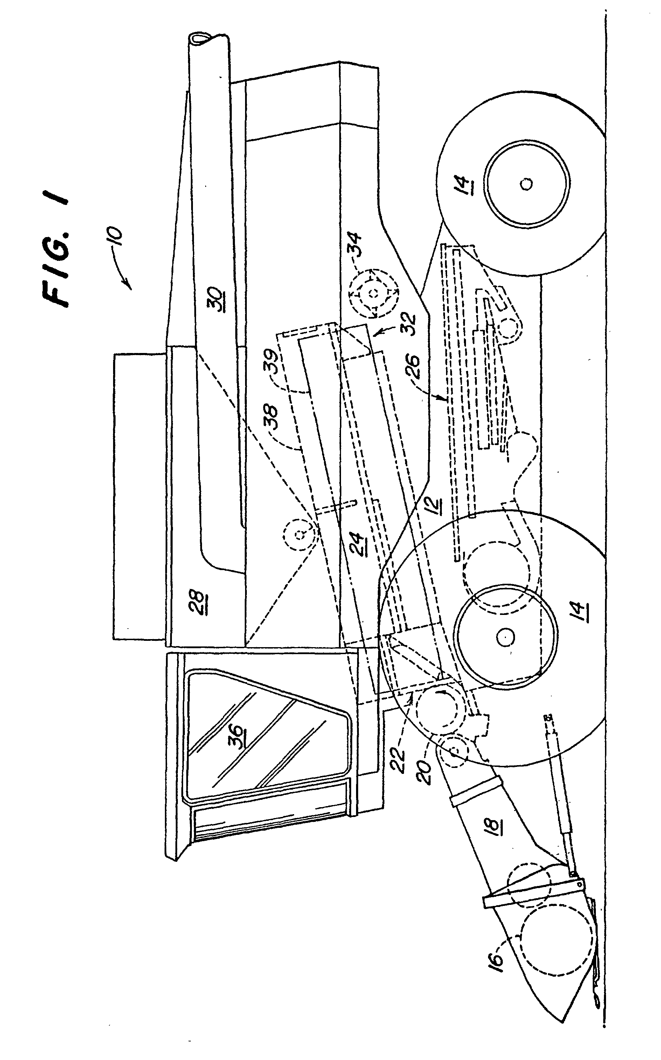

Figur 1 zeigt einen landwirtschaftlichen Mähdrescher 10 mit einem Chassis 12 und sich von diesem erstreckenden Bodenlaufrädern 14. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlaßübergangsbereich 22 an eine Axialtrennvorrichtung 24 weiter.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssytem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden.

Gedroschenes, vom Korn befreites Stroh wird aus der Axialtrennvorrichtung 24 durch einen Auslaß 32 heraus zu einer Abgabetrommel 34 geführt. Die Abgabetrommel 34 wirft das Stroh am rückwärtigen Ende des Mähdreschers 10 aus. Die Bedienung des Mähdreschers 10 erfolgt von einer Fahrerkabine 36 aus.

Die Axialtrennvorrichtung 24 umfaßt ein zylindrisches Rotorgehäuse 38 und einen im Rotorgehäuse 38 angeordneten Rotor 39. Die in Vorwärtsfahrtrichtung vorderen Teile des Rotors 39 und des Rotorgehäuses 38 definieren den Beschickungsabschnitt der Axialtrennvorrichtung 24. Der Rotor 39 ist in diesem Abschnitt mit einer konischen Trommel mit schraubenlinienförmigen Kufen 42 zum Mitnehmen von Erntegut von der Leittrommel 20 ausgestattet. Unmittelbar stromab des Beschickungsabschnitts ist der Dreschabschnitt der Axialtrennvorrichtung 24. In diesem Abschnitt umfaßt der Rotor 39 eine zylindrische Trommel mit einer Anzahl von Gutmitnehmerelementen 50.

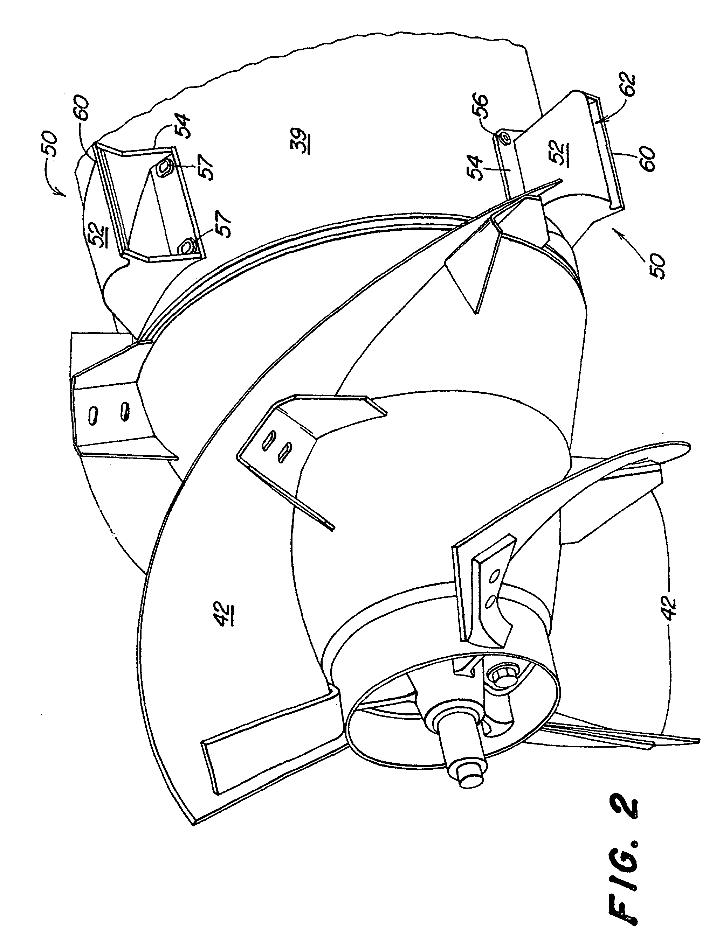

Diese Gutmitnehmerelemente 50 weisen einen hohlen Aufbau (oder Struktur) auf, der einen geglätteten, konvex gekrümmten oberen Abschnitt 51, Seitenwände 52 und eine Rückwand 53 hat. Wie in Figur 2 gezeigt, ist die Rückwand 53 im wesentlichen offen und bildet einen rechteckigen Rahmen. Die Basis des Gutmitnehmerelements 50 ist mit führenden und nachlaufenden Befestigungsflanschen 54, die Befestigungsöffnungen 56 aufweisen, versehen. Befestigungsbolzen 57 verlaufen durch die Befestigungsöffnungen 56, um die Gutmitnehmerelemente 50 am Rotor 39 zu befestigen. Die Befestigungsöffnungen 56 in den führenden Befestigungsflanschen 54 sind kreisförmig, während die Befestigungsöffnungen in den nachlaufenden Befestigungsflanschen 54 Schlitze sind. Der nachlaufende Befestigungsflansch 54 ist außerdem mit Verstärkungseckblechen 55 versehen, die sich zwischen dem Befestigungsflansch 54 und der Rückwand 53 des Gutmitnehmerelements 50 erstrecken.

Die vorliegende Erfindung bezieht sich in erster Linie auf die Form des Gutmitnehmerelements 50. Der glatte, konvex gekrümmte Abschnitt 51 endet in einem konkaven Trog 62. Das Ende des konkaven Trogs 62 ist mit einer sich radial erstreckenden Lippe 60 versehen. Es ist anzumerken, daß sich die Seitenwände 52 nach oben über den Boden des Trogs 62 hinaus erstrecken, um die Enden des konkaven Trogs 62 zu schließen und die sich radial erstreckende Lippe 60 zu verstärken.

Die Gutmitnehmerelemente 50 haben in der in den Zeichnungen dargestellten Form einen glatten konvex gekrümmten Abschnitt 52, was die bevorzugte Ausführungsform der Erfindung ist. Diese Oberfläche könnte jedoch auch mit Reibleisten versehen sein, um aggressivere Dreschcharakteristiken bereitzustellen.

Während des Dreschens wird das Erntegut von dem konvex gekrümmten Abschnitt 52 mitgenommen und gegen die innere Oberfläche des zylindrischen Rotorgehäuses 38 gedrückt. Dieses Zusammendrücken wird durch den konkaven Trog 62 vermindert, bevor das Erntegut durch die sich radial erstreckende Lippe 60 wiederum radial nach außen gestoßen wird.

Die Erfindung beschränkt sich nicht auf die oben beschriebene Ausführungsform, sondern wird nur durch die folgenden Ansprüche beschränkt.

## Patentansprüche

1. Rotor (39) einer Axialtrennvorrichtung (24) für einen Mähdrescher (10), mit einer zylindrischen Trommel und zumindest einem an der Trommel befestigten Gutmitnehmerelement (50), das mit einem konvex gekrümmten Abschnitt (51) versehen ist, der in einem konkaven Trog (62) endet, wobei eine sich radial erstreckende Lippe (60) dem Trog (62) benachbart angeordnet ist, **dadurch gekennzeichnet, dass** die Oberfläche des konvex gekrümmten Abschnitts (51) glatt oder mit Reibleisten versehen ist, dass das Gutmitnehmerelement (50) mit einem führenden und einem nachlaufenden Befestigungsflansch (54) zur Befestigung des Gutmitnehmerelements (50) an der zylindrischen Trommel versehen ist, dass ein Befestigungsflansch (54) mit wenigstens einer kreisförmigen Befestigungsöffnung (56) versehen ist, und dass der andere Befestigungsflansch (54) mit wenigstens einer schlitzförmigen Befestigungsöffnung (56) versehen ist.

2. Rotor (39) nach Anspruch 1, wobei der führende Befestigungsflansch (54) mit wenigstens einer kreisförmigen Befestigungsöffnung (56) versehen ist.

3. Rotor nach Anspruch 1 oder 2, wobei der nachlaufende Befestigungsflansch (54), mit wenigstens einer schlitzförmigen Befestigungsöffnung (56) versehen ist.

4. Rotor nach einem der Ansprüche 1 bis 3, wobei durch die Befestigungsöffnung (56) ein Befestigungsbolzen (57) verläuft, um das Gutmitnehmerelement (50) an der zylindrischen Trommel zu befestigen.

5. Rotor (39) nach einem der Ansprüche 1 bis 4, wobei das Gutmitnehmerelement (50) mit zwei Seitenwänden (52) versehen ist, die sich über den Trog (62) hinaus erstrecken und ihn einschließen.

6. Rotor (39) nach einem der Ansprüche 1 bis 5, wobei das Gutmitnehmerelement (50) mit einer Rückwand (53) versehen ist, und der nachlaufende Befestigungsflansch (54) mit wenigstens einem Verstärkungseckblech (55) versehen ist, das sich zwischen dem nachlaufenden Befestigungsflansch (54) und der Rückwand (53) erstreckt.

7. Rotor (39) nach einem der Ansprüche 1 bis 6, wobei eine Rückwand (53) des Gutmitnehmerelements (50) einen offenen, insbesondere rechteckigen Rahmen bildet.

8. Rotor (39) nach einem der vorhergehenden Ansprüche, wobei das Gutmitnehmerelement (50) eine hohle Struktur aufweist.

9. Rotor (39) nach einem der vorhergehenden Ansprüche, wobei mehrere Gutmitnehmerelemente (50) vorhanden sind.

## Claims

1. A rotor (39) of an axial separator device (24) for a combine harvester (10), with a cylindrical drum and at least one crop entraining element (50) which is fixed on the drum and is provided with a convexly curved section (51) which ends in a concave trough (62), wherein a radially extending lip (60) is arranged next to the trough (62), **characterized in that** the surface of the convexly curved section (51) is smooth or provided with rasp bars, **in that** the crop entraining element (50) is provided with leading and trailing mounting flanges (54) for fixing the crop entraining element (50) on the cylindrical drum, **in that** one mounting flange (54) is provided with at least one circular mounting opening (56) and **in that** the other mounting flange (54) is provided with at least one mounting opening (56) of slot form.

2. A rotor (39) according to claim 1, wherein the leading mounting flange (54) is provided with at least one circular mounting opening (56).

3. A rotor according to claim 1 or 2, wherein the trailing mounting flange (54) is provided with at least one mounting opening (56) of slot form.

4. A rotor according to any of claims 1 to 3, wherein a mounting bolt (57) extends through the mounting opening (56) in order to fix the crop entraining element (50) on the cylindrical drum,

5. A rotor (39) according to any of claims 1 to 4, wherein the crop entraining element (50) is provided with two sidewalls (52) which extend over the trough (62) and enclose it.

6. A rotor (39) according to any of claims 1 to 5, wherein the crop entraining clement (50) is provided with a rear wall (53) and the trailing mounting flange (54) is provided with at least one reinforcing plate (55) which extends between the trailing mounting flange (54) and the rear wall (53).

7. A rotor (39) according to any of claims 1 to 6, wherein a rear wall (53) of the crop entraining element (50) forms an open, in particular a rectangular frame.

8. A rotor (39) according to any of the preceding claims, wherein the crop entraining element (50) has a hollow structure.

9. A rotor (39) according to any of the preceding claims, wherein a plurality of crop entraining elements (50) are provided.

## Revendications

1. Rotor (39) d'un dispositif séparateur axial (24) pour une moissonneuse batteuse (10), comprenant un tambour cylindrique et au moins un élément entraîneur (50) fixé sur le tambour, qui est doté d'une section (51) recourbée de manière convexe, qui se termine dans un bac (62) concave, de sorte qu'une lèvre (60) s'étendant radialement est disposée en étant voisine du bac (62), **caractérisé en ce que** la surface de la section (51) recourbée de manière convexe est lisse ou dotée de bords de friction, **en ce que** l'élément entraîneur (50) est doté d'une bride de fixation (54) à l'avant et à l'arrière pour fixer l'élément entraîneur (50) sur le tambour cylindrique, **en ce qu'**une bride de fixation (54) est dotée au moins d'un orifice de fixation (56) circulaire, et **en ce que** l'autre bride de fixation (54) est dotée au moins d'un orifice de fixation (56) en forme de fente.

2. Rotor (39) selon la revendication 1, dans lequel la bride de fixation (54) à l'avant est dotée d'au moins un orifice de fixation (56) circulaire.

3. Rotor selon la revendication 1 ou 2, dans lequel la bride de fixation (54) à l'arrière est dotée d'au moins un orifice de fixation (56) en forme de fente.

4. Rotor selon l'une quelconque des revendications 1 à 3, dans lequel un boulon de fixation (57) passe à travers l'orifice de fixation (56), pour fixer l'élément entraîneur (50) sur le tambour cylindrique.

5. Rotor (39) selon l'une quelconque des revendications 1 à 4, dans lequel l'élément entraîneur (50) est doté de deux parois latérales (52), qui s'étendent vers l'extérieur au-dessus du bac (62) et l'entourent.

6. Rotor (39) selon l'une quelconque des revendications 1 à 5, dans lequel l'élément entraîneur (50) est doté d'une paroi arrière (53), et la bride de fixation (54) à l'arrière est dotée d'au moins une tôle de renfort (55), qui s'étend entre la bride de fixation (54) à l'arrière et la paroi arrière (53).

7. Rotor (39) selon l'une quelconque des revendications 1 à 6, dans lequel une paroi arrière (53) de l'élément entraîneur (50) forme un cadre ouvert, en particulier rectangulaire.

8. Rotor (39) selon l'une quelconque des revendications précédentes, dans lequel l'élément entraîneur (50) présente une structure creuse.

9. Rotor (39) selon l'une quelconque des revendications précédentes, dans lequel plusieurs éléments entraîneurs (50) sont disponibles.
